# FASCICULE DE BREVET EUROPEEN

(11) **EP 3 541 689 B1**
(45) Date de publication et mention de la délivrance du brevet: **30.12.2020**
(21) Numéro de dépôt: 17817776.2
(22) Date de dépôt: 17.11.2017
(51) Int. Cl.: B62D 55/104, B62D 55/30

(54) **TRAIN DE ROULEMENT POUR VEHICULE CHENILLE, VEHICULE CHENILLE INCORPORANT UN TEL TRAIN DE ROULEMENT ET PROCEDE DE CONVERSION D'UN VEHICULE A ROUES EN VEHICULE CHENILLE**
LAUFWERK FÜR EIN RAUPENFAHRZEUG, RAUPENFAHRZEUG MIT SOLCH EINEM LAUFWERK UND VERFAHREN ZUR UMWANDLUNG EINES RADFAHRZEUGS IN EIN RAUPENFAHRZEUG
RUNNING GEAR FOR A TRACKED VEHICLE, TRACKED VEHICLE INCLUDING SUCH A RUNNING GEAR AND METHOD FOR CONVERTING A WHEELED VEHICLE INTO A TRACKED VEHICLE

(30) Priorité: 17.11.2016 FR 1601641
(43) Date de publication de la demande: 25.09.2019
(73) Titulaire: NEXTER Systems, 78034 Versailles Cedex (FR)
(72) Inventeur: BONNETAIN, Frédéric, 18023 Bourges (FR)
(74) Mandataire: Cabinet Chaillot
(86) Numéro de dépôt international: PCT/FR2017/053143
(87) Numéro de publication internationale: WO 2018/091835

(56) Documents cités:
- WO-A1-03/004335
- JP-U- H 061 151
- NL-A- 9 201 553
- US-A- 2 463 040

## Description

Le domaine technique de l'invention est celui des véhicules chenillés et plus particulièrement des trains de roulement pour les véhicules chenillés.

Les véhicules chenillés sont classiques aussi bien dans le domaine de l'armement que dans le domaine civil.

Un véhicule chenillé comporte le plus souvent une caisse qui est reliée au sol au niveau de chaque côté latéral de la caisse par au moins un train de roulement comprenant une chenille.

Chaque chenille est reliée à des moyens de propulsion, tels qu'un moteur thermique, par des moyens d'entraînement qui comprennent généralement un système mécanique de descente de mouvement raccordé à des roues motrices (ou barbotins) par au moins un arbre d'entraînement.

Par ailleurs un système de direction par différentiel de vitesse est également interposé entre l'arbre d'entraînement et les barbotins.

Les barbotins sont des roues dentées qui engrènent sur des dents complémentaires portées par les maillons de la chenille. Le train de roulement chenillé comporte aussi une roue de renvoi qui permet généralement de régler la tension de la chenille et des galets de roulement qui sont en appui sur le brin de chenille en contact avec le sol.

Des galets de soutien supérieur sont en appui sur le brin de chenille libre et ils permettent de limiter les mouvements et vibrations de la chenille.

Sur les véhicules et trains de roulement connus, les galets de roulement sont reliés à la caisse du véhicule par un moyen de suspension comprenant par exemple un bras articulé soumis à l'action d'un ressort de rappel.

Un tel train de roulement a des performances de guidage des chenilles qui sont insuffisantes. Les galets sont nombreux pour assurer le soutien de la masse du véhicule. Il est généralement nécessaire de les grouper en bogies qui pivotent par rapport à un axe porté par le bras articulé. Le ressort de suspension ne suffit pas alors à assurer le maintien de tous les galets dont seule une partie exerce un appui effectif sur la chenille.

Il peut en résulter des risques de déchenillage. Il en résulte également une perte de l'énergie motrice fournie au barbotin.

On connaît également par la publication JP H06 1151 U11 un train de roulement pour véhicule chenillé comprenant des roues destinées à venir en contact avec la chenille au niveau d'un brin inférieur, roues solidaires d'une platine qui est fixée à un système de suspension de façon à se déplacer sensiblement verticalement par rapport à la caisse. Cependant les roues ainsi positionnées sont toutes solidaires d'une seule et même platine qui peut pivoter par rapport à un axe, modifiant ainsi les caractéristiques de contact de chaque roue avec le brin de chenille.

L'invention a pour but de proposer une architecture de train de roulement pour véhicule chenillé dans laquelle la liaison entre la caisse et la chenille est optimale avec un contact permanent des galets au cours du roulage.

Ainsi le train de roulement selon l'invention permet de concevoir un véhicle combinant les qualités de tenue de route d'un véhicule à roues avec les qualités de mobilité en terrain difficile d'un véhicule chenillé.

Ainsi l'invention a pour objet un train de roulement pour véhicule chenillé, destiné à relier une chenille à un véhicule, lequel train de roulement comprend une roue qui est destinée à venir en contact avec la chenille au niveau d'un brin inférieur, roue qui est solidaire d'une platine destinée à être fixée à un système de suspension du véhicule de façon à se déplacer sensiblement verticalement par rapport à la caisse du véhicule, caractérisé en ce que la platine porte par ailleurs au moins un galet fixé à l'extrémité d'un bras pivotant, galet destiné à être maintenu en contact avec la chenille par un moyen de poussée.

Selon un mode de réalisation, la roue pourra comporter des indentations destinées à coopérer avec des profils complémentaires portés par la chenille.

Selon un mode de réalisation, le moyen de poussée pourra avoir une longueur variable et constituera un moyen ressort destiné à assurer le maintien du galet en appui contre la chenille.

Selon un autre mode de réalisation, le moyen de poussée aura une longueur réglable, le galet étant destiné à former une partie d'un moyen de tension de la chenille.

L'invention a également pour objet un véhicule incorporant au moins un tel train de roulement.

L'invention a ainsi pour objet un véhicule chenillé comportant une caisse qui est reliée au sol au niveau de chaque côté latéral de la caisse par au moins une chenille, chaque chenille étant reliée à des moyens de propulsion par des moyens d'entraînement, véhicule qui est caractérisé en ce que la chenille est reliée au véhicule par au moins un train de roulement selon l'invention, la platine de chaque train de roulement étant solidaire du véhicule par l'intermédiaire d'un système de suspension et pouvant se déplacer sensiblement verticalement par rapport à la caisse du véhicule.

Selon un mode de réalisation, au moins un train de roulement aura sa roue couplée aux moyens d'entrainement, la roue constituant alors une roue d'entraînement pouvant coopérer avec la chenille pour entraîner celle-ci.

Selon un mode de réalisation, toutes les roues des différents trains de roulement pourront être couplées aux moyens d'entraînement.

Selon un autre mode de réalisation, seule la roue du train de roulement situé le plus en arrière du véhicule dans le sens d'avance de ce-dernier sera couplée aux moyens d'entraînement.

Avantageusement, pour au moins un train de roulement, le galet sera disposé en avant de la roue dans le sens d'avance du véhicule.

Selon un mode de réalisation, le train de roulement situé le plus en avant du véhicule dans le sens d'avance de ce dernier porte un galet qui est relié à la platine par un moyen de poussée à longueur réglable, le galet formant alors une partie d'un moyen de tension de la chenille.

Selon un mode de réalisation, les trains de roulements situés en arrière du train de roulement situé le plus en avant du véhicule dans le sens d'avance de ce dernier portent un galet qui est relié à la platine par un moyen de poussée à longueur variable qui est un moyen ressort assurant le maintien du galet en appui contre la chenille.

L'invention a également pour objet un procédé permettant de convertir un véhicule comportant au moins deux roues de chaque côté latéral d'une caisse en un véhicule chenillé.

Ainsi l'invention a pour objet un procédé de conversion d'un véhicule comportant au moins deux roues de chaque côté latéral d'une caisse en un véhicule chenillé, procédé dans lequel on fixe en lieu et place de chaque roue un train de roulement selon l'invention, au moins une chenille étant ensuite disposée de chaque côté du véhicule, les roues des trains de roulement étant en contact avec la chenille au niveau d'un brin inférieur et chaque galet étant maintenu en contact avec la chenille par le moyen de poussée, la chenille pouvant être entraînée par au moins une roue d'un des trains de roulement qui est couplée aux moyens de propulsion du véhicule par des moyens d'entraînement.

Selon un mode de réalisation, on pourra prévoir une seule chenille de chaque côté du véhicule.

L'invention sera mieux comprise à la lecture de la description qui va suivre, description faite en référence aux dessins annexés et dans lesquels :
- La figure 1 est une vue arrière schématique d'un véhicule selon un mode de réalisation de l'invention, les chenilles étant montrées coupées au niveau des roues arrières ;
- La figure 2 est une vue latérale schématique de ce même véhicule ;
- La figure 3 est une vue latérale d'un train de roulement selon l'invention ;
- Les figures 4a et 4b sont trois vues en perspective de ce train de roulement, la figure 4a étant une vue de trois quart avant à partir d'un point de vue externe au véhicule, la figure 4b étant une vue de trois quart arrière à partir d'un point de vue interne au véhicule ;
- La figure 5 est une vue d'un train de roulement particulier ayant une fonction de traction ;
- La figure 6 est une vue latérale d'un train de roulement ayant une fonction de tendeur de chenille.

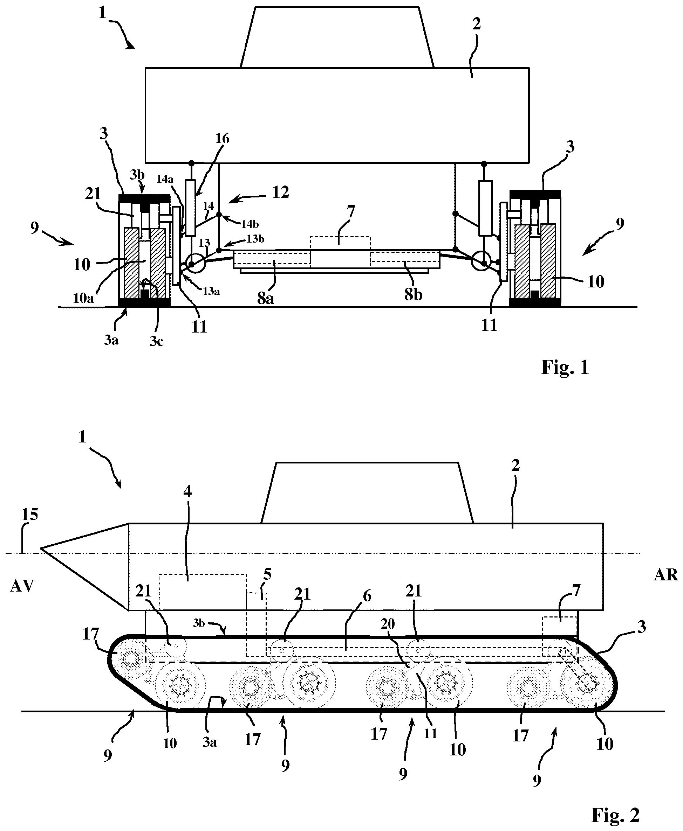

En se reportant aux figures 1 et 2, un véhicule chenillé 1 selon l'invention comporte une caisse 2 qui est reliée au sol au niveau de chaque côté latéral de la caisse par au moins une chenille 3. Ce véhicule comporte ici deux chenilles 3 qui s'étendent sur sensiblement toute la longueur du véhicule. Chaque chenille 3 est reliée à des moyens de propulsion 4 (tel un groupe motopropulseur) par des moyens d'entraînement qui comprennent ici : une descente de mouvement 5, un arbre d'entraînement principal 6, un dispositif de direction par différentiel de vitesse 7 et des arbres latéraux 8a et 8b qui relient le dispositif de direction 7 à deux trains de roulement latéraux 9 selon l'invention, un par chenille.

Les moyens d'entraînement sont des organes mécaniques classiques et il n'est pas nécessaire de les décrire en détails. Une descente de mouvement 5 est un organe mécanique comprenant des engrenages et permettant de transmettre le mouvement rotatif fourni par le groupe motopropulseur 4 à un arbre de transmission 6 qui est disposé à distance de l'arbre de sortie du groupe 4 et parallèle à celui-ci.

Le dispositif de direction 7 est aussi un organe classique. A titre d'exemple, les brevets FR2446756 et US3373636 décrivent un tel dispositif. Les arbres latéraux 8a et 8b sont raccordés aux trains de roulement latéraux 9 par des joints de cardans (non représentés) afin de pouvoir suivre les mouvements verticaux de ces derniers. Des boîtiers de réduction mécanique pourront être également interposés entre le groupe motopropulseur 4 et le dispositif de direction 7 ou bien entre le dispositif de direction 7 et les trains de roulement latéraux 9. Cela afin d'adapter vitesse de rotation et couple en fonction des besoins.

Chaque chenille 3 est donc reliée au véhicule 1 par au moins un train de roulement 9 selon l'invention.

On remarque sur la figure 2 que le véhicule comporte ici quatre trains de roulement 9 au niveau de chaque chenille 3.

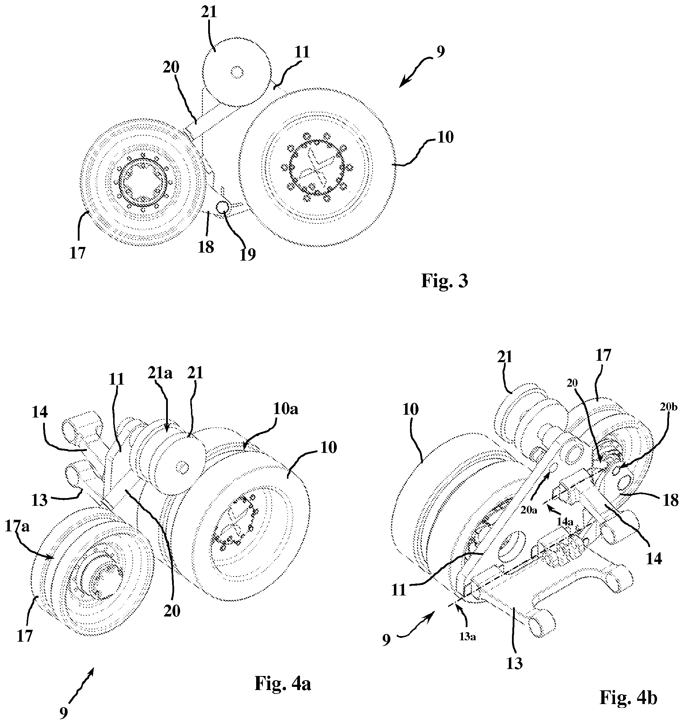

Les figures 3 et 4a, 4b montrent de façon plus précise la structure d'un train de roulement 9 selon l'invention.

Chaque train de roulement 9 comprend une roue 10 qui est en contact avec la chenille 3 au niveau du brin inférieur 3a de celle-ci (figure 2).

Cette roue 10 est solidaire d'une platine 11 par rapport à laquelle elle est libre en rotation. La platine 11 peut se déplacer sensiblement verticalement par rapport à la caisse 2 du véhicule par l'intermédiaire d'un système de suspension 12.

On a représenté schématiquement à la figure 1 un système de suspension 12 à parallélogramme déformable qui comporte un bras inférieur 13 (ou triangle inférieur) et un bras supérieur 14 (ou triangle supérieur). Ces bras sont également visibles sur les figures 4a et 4b. Ils sont articulés par rapport à la platine 11 au niveau d'axes 13a et 14a qui sont parallèles à une direction d'avance longitudinale 15 du véhicule 1 (figure 2).

Comme on le voit à la figure 1, les bras 13 et 14 sont également articulés par rapport à la caisse 2 du véhicule au niveau d'axes 13b et 14b qui sont parallèles aux axes 13a et 14a. La suspension 12 ainsi réalisée est connue sous le nom de suspension à parallélogramme déformable ou à double triangulation. Elle est classique dans le domaine des véhicules. Elle est complétée par un amortisseur 16 qui est monté entre la caisse 2 et un des bras 13 ou 14.

Une telle suspension permet d'assurer lors de l'avance du véhicule un mouvement vertical de la platine 11 par rapport à la caisse 2 du véhicule. La tenue au sol est excellente et la roue 10 se trouve toujours maintenue en appui contre le brin inférieur 3a de la chenille.

Comme on le voit sur les figures 3, 4a et 4b, la platine 11 porte par ailleurs un galet 17 qui est fixé à l'extrémité d'un bras 18 qui est monté pivotant par rapport à la platine 11 (voir la figure 3). Le galet 17 est libre en rotation par rapport au bras 18. Le bras 18 est monté pivotant sur la platine 11 au niveau d'un axe de pivot 19 (figure 3).

Un moyen de poussée 20 à longueur variable, tel un ressort à gaz ou un vérin, est monté entre la platine 11 et le bras 18. Le moyen de poussée 20 est fixé à la platine 11 par une première articulation 20a et au bras 18 par une deuxième articulation 20b (figure 4b).

Le moyen de poussée 20 assure le maintien du galet 17 en contact avec la chenille 3 lors des phases de roulement.

Avec une telle disposition on est assuré que la roue 10 ainsi que le galet 17 se trouvent toujours en contact avec le brin inférieur 3a de la chenille. Même si la roue 10 se soulève avec sa platine 11, le moyen de poussée 20 maintient le galet 17 contre la chenille. Par ailleurs la suspension 12 repousse également la roue 10 vers la chenille 3. L'ensemble accompagne ainsi les mouvements du véhicule, même sur sol accidenté, sans perte de contact. Le guidage de la chenille est donc optimal et les risques de déchenillage sont limités.

Comme on le voit également sur les figures, La platine 11 porte un galet de soutien supérieur 21 qui permet de limiter les mouvements et vibrations du brin de chenille supérieur 3b.

Ce galet supérieur 21 est libre en rotation par rapport à la platine 11 mais il a une position fixe par rapport à celle-ci. Les mouvements verticaux du train de roulement 9 qui sont permis par la suspension 12 vont donc entrainer à la fois le déplacement du brin inférieur 3a et du brin supérieur 3b de la chenille. Le train de roulement 9 délimite ainsi deux plans de roulement équidistants recevant les brins 3a et 3b de la chenille 3.

Comme on le voit à la figure 2, chaque galet 17 est disposé en avant de la roue 10 à laquelle il est relié, la position en avant étant bien entendu repérée par rapport au sens d'avance normale du véhicule, vers l'avant AV de ce dernier. Le repère AR localise l'arrière du véhicule. Une telle disposition améliore également le contact du train de roulement 9 avec la chenille 3. Le galet 17 est appliqué contre le brin inférieur 3a de la chenille et il applique aussi ce brin sur le sol avant le passage de la roue 10, ce qui facilite la coopération de la roue 10 avec la piste de roulement du brin inférieur 3a.

D'une façon classique et représentée sur les figures, la roue 10 comme le galet 17 et le galet supérieur 21 pourront comporter un sillon médian (repéré respectivement 10a, 17a et 21a sur les figures) qui coopère avec les dentures 3c de la chenille (figure 1). Les dentures 3c sont guidées par les sillons 10a, 17a et 21a. La chenille 3 se trouve ainsi maintenue latéralement par rapport au train de roulement 9.

Les roues 10 et les galets 17 et 21 portent de façon classique un bandage de caoutchouc afin de limiter le bruit et l'usure.

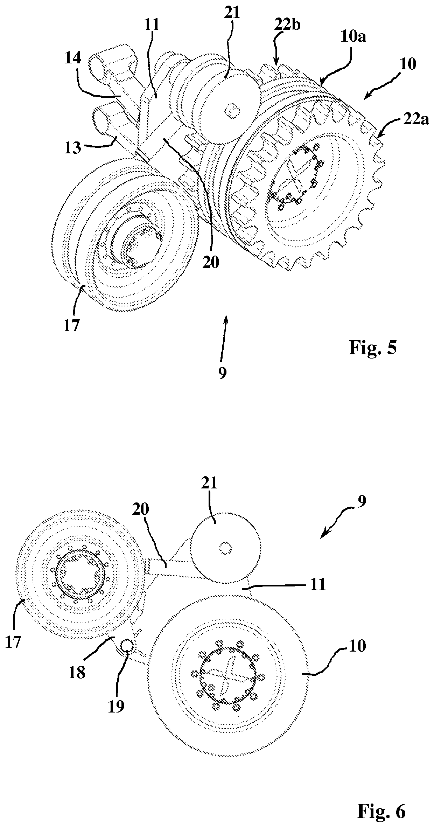

On a représenté à la figure 5 le train de roulement 9 situé le plus en arrière. Ce train 9 ne diffère du précédent que par la forme de la roue 10 qui comporte des indentations 22a et 22b de part et d'autre du sillon médian 10a. Ces indentations sont destinées à coopérer avec des profils complémentaires (non représentés) portés par la chenille 3.

Cette roue arrière 10 constitue ici une roue d'entraînement qui est couplée au moyen d'entraînement 8a,8b. C'est cette roue d'entraînement qui s'engage dans la chenille 3 et provoque la mobilité du véhicule.

Dans l'exemple représenté à la figure 2, seule la roue du train de roulement 9 situé le plus en arrière AR du véhicule dans le sens d'avance de ce dernier est couplée aux moyens d'entraînement. Les roues 10 des autres trains de roulement 9 sont libres en rotation.

La figure 6 montre le train de roulement 9 situé le plus en avant AV du véhicule dans le sens d'avance de ce dernier. Ce train 9 ne diffère des autres que par la nature du moyen de poussée 20 qui porte le galet 17. Ce moyen de poussée n'est pas ici constitué par un ressort dont la longueur va varier constamment lors du roulage mais par un vérin 20 (électrique ou hydraulique), à longueur fixe mais réglable, et qui permet de fixer la position du galet 17 par rapport à la platine 11. Le vérin 20 pourrait être un vérin de compensation dynamique, c'est à dire un vérin dont la longueur est pilotée d'une façon continue lors du roulage par un boîtier de commande. De tels vérins de compensation dynamique sont connus pour régler d'une façon continue la tension d'une chenille. On pourra par exemple consulter les brevets FR2703971 ou US4840437.

Le vérin 20 et le galet 17 forment alors pour ce train de roulement 9 un moyen de tension de la chenille 3.

La longueur 20 pourra être réglée manuellement lors de phases de maintenance du véhicule. Elle pourra aussi être réglée lors du roulage par le pilote du véhicule et à l'aide d'un dispositif de commande approprié.

On a représenté un véhicule dans lequel seul le train de roulement 9 le plus en arrière était couplé aux moyens d'entraînement.

Il est possible à titre de variante de coupler aux moyens d'entraînement plus d'une roue 10 par chenille (voire toutes les roues 10 des différents trains de roulement 9).

Ce couplage sera réalisé à l'aide de boîtiers de transferts différentiels de type classique analogues à ceux qui sont utilisés dans les véhicules comportant plusieurs trains de roues motrices.

La seule différence est ici que la roue du véhicule est remplacée par la roue d'un train de roulement 9 entraînant la chenille.

Lorsque chaque chenille est ainsi entraînée par plusieurs roues motrices on note une amélioration de l'efficacité de l'entraînement, en particulier lors de la progression sur une pente. Cette amélioration de l'efficacité de la traction est de l'ordre de un pour cent pour un entraînement à huit roues motrices contre un entraînement à deux roues motrices.

Lorsque l'entraînement est assuré par plusieurs roues motrices pour chaque chenille, on pourra réaliser toutes les roues motrices sous la forme de la figure 5, c'est à dire avec des indentations pouvant coopérer avec des profils complémentaires portés par la chenille.

On a remarqué que l'invention permettait d'associer les avantages d'une traction par chenille (efficacité tout terrain) à ceux d'une traction par roues (suspension efficace).

L'invention propose également un procédé permettant de convertir un véhicule comportant au moins deux roues de chaque côté latéral d'une caisse en un véhicule chenillé.

Les véhicules à roues, en particulier blindés, comportant plusieurs essieux de traction sont classiques. Chaque roue d'un tel véhicule est suspendue par rapport à la caisse du véhicule par une suspension à parallélogramme déformable.

Avec le procédé selon l'invention, on fixera en lieu et place de chaque roue, un train de roulement 9 selon l'invention et tel que décrit précédemment et comprenant en particulier une roue 10 qui est solidaire d'une platine 11. La platine 11 sera alors fixée à la suspension 12 du véhicule en lieu et place de la roue du véhicule initial. On pourra alors relier la roue 10 aux moyens de propulsion du véhicule par des moyens d'entraînement qui pourront être ceux qui entraînaient déjà les roues du véhicule initial.

On dispose ensuite au moins une chenille 3 de chaque côté du véhicule de façon à être entraînée par au moins une roue 10 d'un des trains de roulement 9 ainsi mis en place.

Le montage est alors identique à celui montré aux figures 1 et 2. Les roues 10 des trains de roulement 9 sont en contact avec la chenille 3 au niveau d'un brin inférieur 3a. Les roues 10 peuvent par ailleurs se déplacer sensiblement verticalement par rapport à la caisse du véhicule par l'intermédiaire du système de suspension 12.

Bien sûr la platine 11 porte par ailleurs au moins un galet 17 fixé à l'extrémité d'un bras 18 qui est monté pivotant par rapport à la platine 11. Le galet 17 est maintenu en contact avec la chenille par un moyen de poussée 20.

Ainsi on passe aisément d'un véhicule à roues à un véhicule chenillé en conservant les moyens d'entraînement du véhicule à roues qui sont alors utilisés pour l'entraînement des chenilles.

On pourra prévoir une seule chenille de chaque côté du véhicule. A titre de variante on pourra prévoir plusieurs chenilles de chaque côté du véhicule par exemple, suivant l'exemple de la figure 2, on pourra prévoir deux chenilles de chaque côté : une chenille avant couplant les deux trains de roulement 9 avant et une chenille arrière couplant les deux trains de roulement arrière. Bien sûr chaque chenille est entraînée par une roue de traction qui lui est propre, par exemple la roue 10 du train arrière de la chenille considérée.

Comme précisé précédemment, toutes les roues 10 des trains de roulement 9 pourront être motrices.

## Revendications

1. Train de roulement pour véhicule chenillé, destiné à relier une chenille (3) à un véhicule (1), lequel train de roulement (9) comprend une roue (10) qui est destinée à venir en contact avec la chenille (3) au niveau d'un brin inférieur (3a), roue qui est solidaire d'une platine (11) destinée à être fixée à un système de suspension du véhicule de façon à se déplacer sensiblement verticalement par rapport à la caisse (2) du véhicule, **caractérisé en ce que** la platine (11) porte par ailleurs au moins un galet (17) fixé à l'extrémité d'un bras pivotant (18), galet destiné à être maintenu en contact avec la chenille (3) par un moyen de poussée (20).

2. Train de roulement selon la revendication 1, **caractérisé en ce que** la roue (10) comporte des indentations (22a,22b) destinées à coopérer avec des profils complémentaires portés par la chenille (3).

3. Train de roulement selon une des revendications 1 ou 2, **caractérisé en ce que** le moyen de poussée (20) a une longueur variable et constitue un moyen ressort destiné à assurer le maintien du galet (17) en appui contre la chenille.

4. Train de roulement selon une des revendications 1 ou 2, **caractérisé en ce que** le moyen de poussée (20) a une longueur réglable, le galet (17) étant destiné à former une partie d'un moyen de tension de la chenille (3).

5. Véhicule chenillé (1) comportant une caisse (2) qui est reliée au sol au niveau de chaque côté latéral de la caisse par au moins une chenille (3), chaque chenille étant reliée à des moyens de propulsion (4) par des moyens d'entraînement (5,6,7), véhicule ***caractérisé* en ce que** la chenille (3) est reliée au véhicule par au moins un train de roulement (9) selon une des revendications 1 à 4, la platine (11) de chaque train de roulement (9) étant solidaire du véhicule par l'intermédiaire d'un système de suspension (12) et pouvant se déplacer sensiblement verticalement par rapport à la caisse (2) du véhicule.

6. Véhicule chenillé selon la revendication 5, **caractérisé en ce que** au moins un train de roulement (9) a sa roue (10) couplée aux moyens d'entrainement, la roue constituant alors une roue d'entraînement pouvant coopérer avec la chenille (3) pour entraîner celle-ci.

7. Véhicule chenillé selon la revendication 6, **caractérisé en ce que** toutes les roues (10) des différents trains de roulement (9) sont couplées aux moyens d'entraînement.

8. Véhicule chenillé selon la revendication 6, **caractérisé en ce que** seule la roue (10) du train de roulement situé le plus en arrière du véhicule dans le sens d'avance de ce-dernier est couplée aux moyens d'entraînement.

9. Véhicule chenillé selon une des revendications 5 à 8, **caractérisé en ce que**, au niveau d'au moins un train de roulement (9), le galet (17) est disposé en avant de la roue (10) dans le sens d'avance du véhicule.

10. Véhicule chenillé selon une des revendications 5 à 9, **caractérisé en ce que** le train de roulement (9) situé le plus en avant du véhicule dans le sens d'avance de ce dernier porte un galet (17) qui est relié à la platine (11) par un moyen de poussée (20) à longueur réglable, le galet (17) formant alors une partie d'un moyen de tension de la chenille (3) .

11. Véhicule chenillé selon une des revendications 5 à 10, **caractérisé en ce que** les trains de roulements (9) situés en arrière du train de roulement situé le plus en avant du véhicule dans le sens d'avance de ce dernier portent un galet (17) qui est relié à la platine (11) par un moyen de poussée (20) à longueur variable qui est un moyen ressort assurant le maintien du galet (17) en appui contre la chenille (3).

12. Procédé de conversion d'un véhicule (1) comportant au moins deux roues de chaque côté latéral d'une caisse (2) en un véhicule chenillé, procédé dans lequel on fixe en lieu et place de chaque roue un train de roulement (9) selon une des revendications 1 à 4, au moins une chenille étant ensuite disposée de chaque côté du véhicule, les roues (10) des trains de roulement (9) étant en contact avec la chenille (3) au niveau d'un brin inférieur (3a) et chaque galet (17) étant maintenu en contact avec la chenille (3) par le moyen de poussée (20), la chenille pouvant être entraînée par au moins une roue (10) d'un des trains de roulement (9) qui est couplée aux moyens de propulsion du véhicule par des moyens d'entraînement.

13. Procédé de conversion selon la revendication 12, **caractérisé en ce qu'**on prévoit une seule chenille (3) de chaque côté du véhicule (1).

## Patentansprüche

1. Laufwerk für Raupenfahrzeug, das zur Verbindung einer Raupe (3) mit einem Fahrzeug (1) bestimmt ist, wobei das Laufwerk (9) ein Rad (10) aufweist, das zum Inkontaktkommen mit der Raupe (3) im Bereich eines unteren Strangs (3a) bestimmt ist, wobei das Rad mit einer Platte (11) fest verbunden ist, die zur Befestigung an einem Aufhängungssystem des Fahrzeugs derart vorgesehen ist, dass sie sich etwa vertikal in Bezug auf die Karosserie (2) des Fahrzeugs verlagert, **dadurch gekennzeichnet, dass** die Platte (11) im Übrigen mindestens eine Rolle (17) trägt, die am Ende eines Schwenkarms (18) befestigt ist, wobei die Rolle zum Kontakthalten mit der Raupe (3) durch ein Druckmittel (20) bestimmt ist.

2. Laufwerk nach Anspruch 1, **dadurch gekennzeichnet, dass** das Rad (10) Einkerbungen (22a, 22b) aufweist, die zum Zusammenwirken mit komplementären Profilen bestimmt sind, die von der Raupe (3) getragen werden.

3. Laufwerk nach einem der Ansprüche 1 oder 2, **dadurch gekennzeichnet, dass** das Druckmittel (20) eine variable Länge hat und ein Federmittel bildet, das zur Sicherung des Halts der Rolle (17) abgestützt auf der Raupe bestimmt ist.

4. Laufwerk nach einem der Ansprüche 1 oder 2, **dadurch gekennzeichnet, dass** das Druckmittel (20) eine einstellbare Länge hat, wobei die Rolle (17) zur Bildung eines Teils eines Spannungsmittels der Raupe (3) bestimmt ist.

5. Raupenfahrzeug (1), aufweisend eine Karosserie (2), die mit dem Boden im Bereich jeder seitlichen Seite der Karosserie durch mindestens eine Raupe (3) verbunden ist, wobei jede Raupe durch Antriebsmittel (5, 6, 7) mit Vortriebmitteln (4) verbunden ist, wobei das Fahrzeug **dadurch gekennzeichnet ist, dass** die Raupe (3) mit dem Fahrzeug durch mindestens ein Laufwerk (9) nach einem der Ansprüche 1 bis 4 verbunden ist, wobei die Platte (11) jedes Laufwerks (9) mit dem Fahrzeug über ein Aufhängungssystem (12) fest verbunden und etwa vertikal in Bezug auf die Karosserie (2) des Fahrzeugs verlagerbar ist.

6. Raupenfahrzeug nach Anspruch 5, **dadurch gekennzeichnet, dass** mindestens ein Laufwerk (9) sein Rad (10) an die Antriebsmittel gekoppelt hat, wobei das Rad somit ein Antriebsrad darstellt, das mit der Raupe (3) zusammenwirken kann, um diese anzutreiben.

7. Raupenfahrzeug nach Anspruch 6, **dadurch gekennzeichnet, dass** alle Räder (10) der verschiedenen Laufwerke (9) an die Antriebsmittel gekoppelt sind.

8. Raupenfahrzeug nach Anspruch 6, **dadurch gekennzeichnet, dass** nur das Rad (10) des Laufwerks, das sich am Fahrzeug in Fahrtrichtung desselben am meisten hinten befindet, an die Antriebsmittel gekoppelt ist.

9. Raupenfahrzeug nach einem der Ansprüche 5 bis 8, **dadurch gekennzeichnet, dass** im Bereich mindestens eines Laufwerks (9) die Rolle (17) in Fahrtrichtung des Fahrzeugs vor dem Rad (10) angeordnet ist.

10. Raupenfahrzeug nach einem der Ansprüche 5 bis 9, **dadurch gekennzeichnet, dass** das Laufwerk (9), das sich am Fahrzeug in Fahrtrichtung desselben am meisten vorn befindet, eine Rolle (17) trägt, die mit der Platte (11) durch Druckmittel (20) mit einstellbarer Länge verbunden ist, wobei die Rolle (17) somit einen Teil eines Spannungsmittels der Raupe (3) bildet.

11. Raupenfahrzeug nach einem der Ansprüche 5 bis 10, **dadurch gekennzeichnet, dass** die Laufwerke (9), die sich hinter dem Laufwerk befinden, das sich am Fahrzeug in Fahrtrichtung desselben am meisten vorn befindet, eine Rolle (17) tragen, die mit der Platte (11) durch ein Druckmittel (20) mit variabler Länge verbunden ist, das ein Federmittel ist, das den Halt der Rolle (17) abgestützt auf der Raupe (3) sichert.

12. Verfahren zur Umwandlung eines Fahrzeugs (1), aufweisend mindestens zwei Räder auf jeder seitlichen Seite einer Karosserie (2), in ein Raupenfahrzeug, wobei bei dem Verfahren anstelle jedes Rads ein Laufwerk (9) nach einem der Ansprüche 1 bis 4 befestigt wird, wobei dann mindestens eine Raupe auf jeder Seite des Fahrzeugs angeordnet ist, wobei die Räder (10) der Laufwerke (9) im Bereich eines unteren Strangs (3a) im Kontakt mit der Raupe (3) sind und jede Rolle (17) durch das Druckmittel (20) im Kontakt mit der Raupe (3) gehalten wird, wobei die Raupe durch mindestens ein Rad (10) eines der Laufwerke (9) antreibbar ist, das durch Antriebsmittel an Vortriebsmittel des Fahrzeugs gekoppelt ist.

13. Umwandlungsverfahren nach Anspruch 12, **dadurch gekennzeichnet, dass** eine einzige Raupe (3) auf jeder Seite des Fahrzeugs (1) vorgesehen ist.

## Claims

1. A running gear for a tracked vehicle, intended to connect a track (3) to a vehicle (1), which running gear (9) comprises a wheel (10) that is intended to come into contact with the track (3) at a lower strand (3a), the wheel being secured to a plate (11) intended to be fixed to a suspension system of the vehicle so as to move substantially vertically relative to the body (2) of the vehicle, **characterised in that** the plate (11) also bears at least one roller (17) fastened to the end of a pivoting arm (18), the roller being intended to be kept in contact with the track (3) by a pushing means (20).

2. The running gear according to claim 1, **characterised in that** the wheel (10) includes indentations (22a, 22b) intended to cooperate with complementary profiles borne by the track (3).

3. The running gear according to one of claims 1 or 2, **characterised in that** the pushing means (20) has a variable length and constitutes a spring means intended to ensure that the roller (17) is kept bearing against the track.

4. The running gear according to one of claims 1 or 2, **characterised in that** the pushing means (20) has an adjustable length, the roller (17) being intended to form part of a tensioning means of the track (3).

5. A tracked vehicle (1) including a body (2) that is connected to the ground at each lateral side of the body by at least one track (3), each track being connected to propulsion means (4) by driving means (5, 6, 7), the vehicle being ***characterised* in *that*** the track (3) is connected to the vehicle by at least one running gear (9) according to one of claims 1 to 4, the plate (11) of each running gear (9) being secured to the vehicle by means of a suspension system (12) and being able to move substantially vertically relative to the body (2) of the vehicle.

6. The tracked vehicle according to claim 5, **characterised in that** at least one running gear (9) has its wheel (10) coupled to the driving means, the wheel then constituting a driving wheel able to cooperate with the track (3) to drive the latter.

7. The tracked vehicle according to claim 6, **characterised in that** all of the wheels (10) of the plurality of running gears (9) are coupled to the driving means.

8. The tracked vehicle according to claim 6, **characterised in that** only the wheel (10) of the running gear located furthest to the rear of the vehicle in the direction of forward movement of the latter is coupled to the driving means.

9. The tracked vehicle according to one of claims 5 to 8, **characterised in that**, at least at one running gear (9), the roller (17) is arranged in front of the wheel (10) in the direction of forward movement of the vehicle.

10. The tracked vehicle according to one of claims 5 to 9, **characterised in that** the running gear (9) located furthest to the front of the vehicle in the direction of forward movement of the latter bears a roller (17) that is connected to the plate (11) by a pushing means (20) of adjustable length, the roller (17) then forming part of a tensioning means of the track (3).

11. The tracked vehicle according to one of claims 5 to 10, **characterised in that** the running gears (9) located behind the running gear located furthest to the front of the vehicle in the direction of forward movement of the latter bear a roller (17) that is connected to the plate (11) by a pushing means (20) of variable length that is a spring means ensuring that the roller (17) is kept bearing against the track (3).

12. A method for converting a vehicle (1) including at least two wheels on each lateral side of a body (2) into a tracked vehicle, method in which a running gear (9) according to one of claims 1 to 4 is fastened instead of each wheel, then at least one track being arranged on each side of the vehicle, the wheels (10) of the running gears (9) being in contact with the track (3) at a lower strand (3a) and each roller (17) being kept in contact with the track (3) by the pushing means (20), the track being able to be driven by at least one wheel (10) of one of the running gears (9) that is coupled to the propulsion means of the vehicle by driving means.

13. The conversion method according to claim 12, **characterised in that** a single track (3) is provided on each side of the vehicle (1).
